# EUROPÄISCHE PATENTSCHRIFT

(11) **EP 0 654 660 B1**
(45) Veröffentlichungstag und Bekanntmachung des Hinweises auf die Patenterteilung: **29.03.2000**
(21) Anmeldenummer: 94115032.8
(22) Anmeldetag: 23.09.1994
(51) Int. Cl.: G01N 11/14, B01F 13/08

(54) **Verfahren und Vorrichtung zur Erkennung der Viskositätsänderung eines mittels Magnetrührer gerührten Mediums**
Method and apparatus for detecting viscosity changes in a medium stirred by a magnetic stirrer
Procédé et appareil de détection du changement de viscosité dans un fluide agité par un agitateur magnétique

(30) Priorität: 19.11.1993 DE 4339328
(43) Veröffentlichungstag der Anmeldung: 24.05.1995
(73) Patentinhaber: JANKE & KUNKEL GMBH & CO. KG IKA-Labortechnik, D-79219 Staufen (DE)
(72) Erfinder: Stiegelmann, René, D-79219 Staufen (DE); Eble, Erhard, Dipl.-Ing. (FH), D-79189 Bad Krozingen-Tunsel (DE); Siegel, Helmut, D-79189 Bad Krozingen (DE)
(74) Vertreter: Schmitt, Hans, Dipl.-Ing.

(56) Entgegenhaltungen:
- DD-A- 156 144
- DE-A- 2 929 437
- DE-A- 3 322 409
- FR-A- 2 687 223
- SOVIET PATENTS ABSTRACTS Section EI, Week 9207, Derwent Publications Ltd., London, GB; Class S03, AN 92-055539 & SU-A-1 636 725 (GORKI UNIV PHYS TEC) 23. März 1991
- DATABASE WPI Section Ch, Week 8831, Derwent Publications Ltd., London, GB; Class J02, AN 88-216145 & JP-A-63 151 342 (GAKKEN KK) 23. Juni 1988 & PATENT ABSTRACTS OF JAPAN vol. 12, no. 421 (C-541) (3268) 8. November 1988

## Beschreibung

Die Erfindung betrifft ein Verfahren zum Erkennen der Viskositätsänderung eines mittels Magnetrührer gerührten Mediums in einem Gefäß, bei dem in dem Medium ein Rührmagnet dadurch in Drehung versetzt wird, daß unterhalb des Gefäßes ein Magnet mit Hilfe eines Antriebsmotors gedreht wird, der mit dem Rührmagneten magnetisch gekoppelt ist und bei dem die Drehzahl des Antriebsmotors durch die Regelung konstant gehalten und die Stellgrößenänderung des Reglers bei Laständerung erfaßt wird.

Die Erfindung betrifft ferner eine Vorrichtung zur Durchführung des Verfahrens mit einem Magnetrührer, bei dem ein mit Hilfe eines Antriebsmotors drehangetriebener Magnet über magnetische Koppelung einen Rührmagneten innerhalb eines Gefäßes für ein Medium in Drehung versetzt und der Magnetrührer einen Regler für die Drehzahl des Antriebsmotors aufweist und zwichen dem Regler und dem Antriebsmotor eine Auswerteeinrichtung zum Erfassen der Stellgrößenänderung des Reglers angeschlossen ist.

Magnetrührer mit einem durch einen Antriebsmotor drehbaren Magneten sind bekannt. Dieser drehbare Magnet wird bei der Betätigung mit einem Rührmagneten magnetisch gekuppelt, welcher Rührmagnet in einem Gefäß mit dem zu rührenden Medium angeordnet ist und sich in der Regel oberhalb des drehbaren Magneten bei einem Magnetrührer der eingangs genannten Art gemäß FR-A-2 687 223 aber unterhalb dieses Magneten befindet.

Dabei ist auch bekannt, daß während des Rührvorganges die Viskosität des Mediums beziehungsweise der Flüssigkeit ansteigen oder abnehmen kann. Häufig sind allerdings solche Viskositätsänderungen so gering, daß dies mit herkömmlichen Mitteln und Verfahren nicht oder nur sehr ungenau erfaßt werden kann. Beispielsweise wird bisher aus dem Rührgefäß eine Probe entnommen, deren Viskosität gemessen und dann die Probe-Menge wieder in das Gefäß zurück geschüttet, damit die gesamte Menge der gerührten Flüssigkeit in dem Rührgefäß nicht verändert wird. Während der Entnahme und dem Überführen der Probe zu einer Meßstelle können jedoch schon wieder weitere Viskositätsänderungen auftreten, so daß ein verfälschtes Meßergebnis die Folge sein kann. Außerdem kann das Entnehmen der Probe selbst und ihr Zurückschütten wiederum zu geringfügigen Viskositätsänderungen führen.

Aus der schon erwähnten FR-A-2 687 223 ist es bekannt, die Stromaufnahme des Antriebsmotors zu messen und somit eine Veränderung der Leistungsaufnahme bei Laständerung zu erkennen. Dies ist jedoch aufwendig und auch ungenau. Laständerungen eines solchen Antriebsmotors können bei Viskositätsschwankungen und vor allem bei kleinen Viskositätsänderungen der zu rührenden Flüssigkeit geringer als zum Beispiel die Netzschwankungen der Stromversorgung sein, so daß auf diese Weise kein zuverlässiger Wert für die Tendenz einer Viskositätsänderung gewonnen werden kann.

Aus der DE-AS 1 804 292 ist eine Vorrichtung zur Bestimmung der Prothrombin-Zeit von Blutplasma bekannt, die darauf beruht, daß bei der Verfestigung des Blutplasmas aufgrund der dann ansteigenden Viskosität ein Rührmagnet an der weiteren Drehung gehindert wird, so daß mit Hilfe eines induktiven Schaltelementes ein elektrisches Signal erzeugt werden kann, um diesen Zeitpunkt anzuzeigen. Dadurch wird jedoch lediglich die Verfestigung des Blutplasma und nicht eine schon geringfügige Viskositätsänderung angezeigt. Vor allem läßt sich dadurch keine Tendenz einer Viskositätsänderung bestimmen.

Aus DE 23 66 207 C2 ist eine Vorrichtung zum Messen von Aushärtungszeiten, insbesondere für Kunstharze anderer Gattung bekannt, bei welcher an einer mit einem Drehantrieb versehenen Stelle ein Rührkopf sitzt und eine in Abhängigkeit von einem stark erhöhten Rührwiderstand schaltende Abschaltvorrichtung für den Drehantrieb sowie ein Zeitmesser vorgesehen sind. Dabei ist eine Abschaltvorrichtung vorgesehen, die auf den bei Erhöhung des Rührwiderstands auftretenden Anstieg der Stromaufnahme des Drehantriebes bei einem vorgegebenen Grenzwert anspricht. Auch damit können keine Tendenzen einer Viskositätsänderung zuverlässig bestimmt werden.

Der Erfindung liegt deshalb die Aufgabe zugrunde, ein Verfahren der eingangs genannten Art sowie eine Vorrichtung zur Durchführung dieses Verfahrens zu schaffen, womit ein Benutzer zu beliebigen Zeiten erkennen kann, ob die Viskosität des gerührten Mediums zunimmt, abnimmt oder gleichbleibt.

Zur Lösung dieser Aufgabe dient das eingangs genannte Verfahren, bei dem eine momentane Viskosität des Mediums als Referenzwert gewählt und eine im weiteren Betriebsverlauf bei Laständerung mittels eines mit Software realisierten, digital betriebenen Reglers erfaßte Stellgrößenänderung als Maß für die Änderung der Viskosität angezeigt wird.

Es wird also nicht die Stromaufnahme des Motors gemessen, die nicht zu brauchbaren Werten führen würde, sondern in überraschender und vorteilhafter Weise werden Änderungen der Stellgröße des Reglers erfaßt. Die am Regler auftretende Stellgrößenänderung ergibt einen zuverlässigen Wert für eine Viskositätsänderung.

Eine besonders präzise Erfassung und auch Anzeige einer Viskositätsänderung wird ermöglicht, wenn Störgrößen in Form von Viskositätsveränderungen mittels des mit Software realisierten, digital betriebenen Reglers ausgeregelt und gleichzeitig dabei die Stellgrößenänderungen des Reglers unter Verwendung entsprechender Software als Maß für die Änderung der Viskosität erfaßt und angezeigt werden.

Mit Software realisierte, digital betriebene Regler, die auch "Software-Regler" genannt werden, sind an sich bekannt. Wird nun ein solcher Regler für einen Magnetrührer und dessen Antriebsmotor verwendet, kann also mit preiswerten Mitteln erkennbar gemacht werden, wann und wenn dieser Regler in Tätigkeit treten muß, um den Antriebsmotor auf einer konstanten Drehzahl zu halten. Gleichzeitig können die am Regler auftretenden Änderungen als Tendenz der Viskositätsänderung erfaßt und erkennbar gemacht werden.

Eine weitere Ausgestaltung der Erfindung kann darin bestehen, daß stark schwankende relative Stellgrößenänderung des Reglers erfaßt und als Signal dafür gewertet werden, daß die Kupplung zwischen angetriebenem Magneten und Rührmagneten abgerissen ist. Ist nämlich diese magnetische Kupplung unterbrochen, macht der Antriebsmotor ständig unterschiedlich schnelle Drehbewegungen, die der Regler auszugleichen versucht, weil gemäß dem gattungsgemäßen Verfahren und der gattungsgemäßen Vorrichtung die Drehzahl des Antriebsmotors durch die Regelung konstanz gehalten werden soll, so daß im Falle einer Unterbrechung der magnetischen Kupplung sehr viele Stellgrößenänderungen auftreten.

Zur Lösung dieser Aufgabe dient ferner die eingangs erwähnte Vorrichtung zur Durchführung des Verfahrens mit einem Magnetrührer der dort angegebenen Art, bei dem ein Rührmagnet innerhalb eines Gefäßes für ein Medium mit Hilfe eines durch einen Antriebsmotor drehangetriebenen Magneten über magnetische Kopplung drehbar ist und der Magnetrührer einen Regler für die Drehzahl des Antriebsmotors aufweist und zwischen dem Regler und dem Antriebsmotor eine Auswerteeinrichtung zum Erfassen und Anzeigen der Stellgrößenänderung des Reglers angeschlossen ist, wobei als Regler ein mit Software realisierter, digital betriebener Regler vorgesehen ist und eine Taste zum Erfassen einer zu einem Zeitpunkt bestehenden Viskosität als Referenzwert und eine Anzeige der bei Laständerung erfaßten Stellgrößenänderung als Maß für die Viskositätsänderung vorgesehen sind. Es wird also mit preiswerten Mitteln erkennbar gemacht, wann und wenn dieser Regler in Tätigkeit treten muß, um den Antriebsmotor auf einer konstanten Drehzahl zu halten, auch wenn dazu Laständerungen des Antriebsmotors auszugleichen sind. Die am Regler auftretenden Änderungen können also als Tendenz der Viskositätsänderung erfaßt und erkennbar gemacht werden.

Dabei ist es zweckmäßig, wenn der Auswerteeinrichtung ein Filter zugeordnet ist, der kurzzeitige Stellgrößenschwankungen eliminiert oder unterdrückt. Es kann also eine präzise Auswertung der Stellgrößenänderung bei Laständerung erfaßt und angezeigt werden, ohne daß kurzzeitige, nicht durch Viskositätsänderungen verursachte Stellgrößenschwankungen ein falsches Bild ergeben. Dem Benutzer wird eine Trend- oder Tendenzanzeige der Viskosität zur Verfügung gestellt.

Besonders günstig ist dabei, daß ein Benutzer eines Magnetrührers eine wichtige zusätzliche Information einerseits über Viskositätsänderungen, anderseits auch über die magnetische Kupplung erhalten kann, ohne daß aufwendige zusätzliche Vorrichtungsteile oder Aggregate mit entsprechendem Platzbedarf in dem Magnetrührer untergebracht werden müssen.

Nachstehend ist ein Ausführungsbeispiel der Erfindung anhand der Zeichnung näher beschrieben. Es zeigt in zum Teil schematisierter Darstellung:
- Fig.1: einen Magnetrührer mit einem Antriebsmotor, der einen drehbaren Permanentmagneten antreibt, und mit einer Aufstellplatte, zum Beispiel einer Heizplatte, auf welcher ein Gefäß mit einer Flüssigkeit aufstellbar ist, in welcher sich ein Rührmagnet befindet, der beim Betrieb mit dem angetriebenen Drehmagneten magnetisch gekuppelt ist sowie
- Fig.2: eine schematisierte Darstellung der Regelung der Motordrehzahl und der Erfassung der Tendenz der Viskosität des gerührten Mediums.

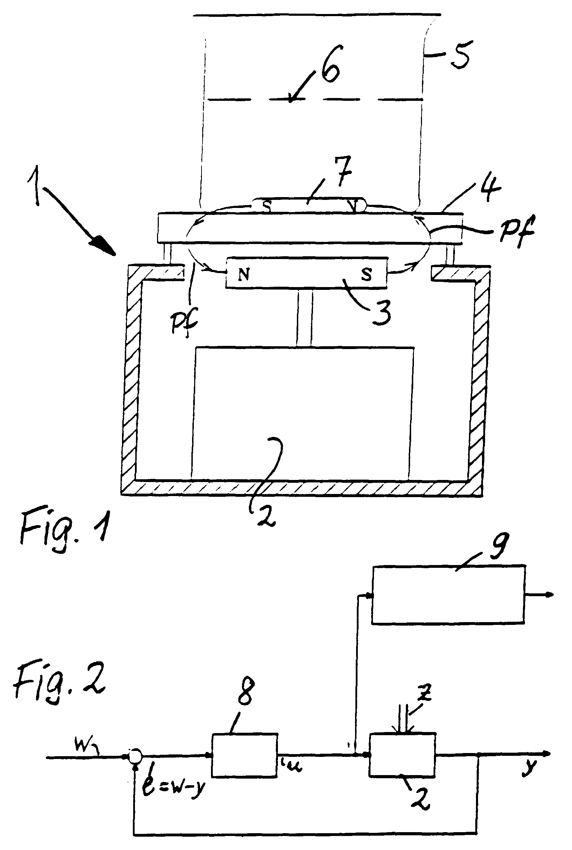

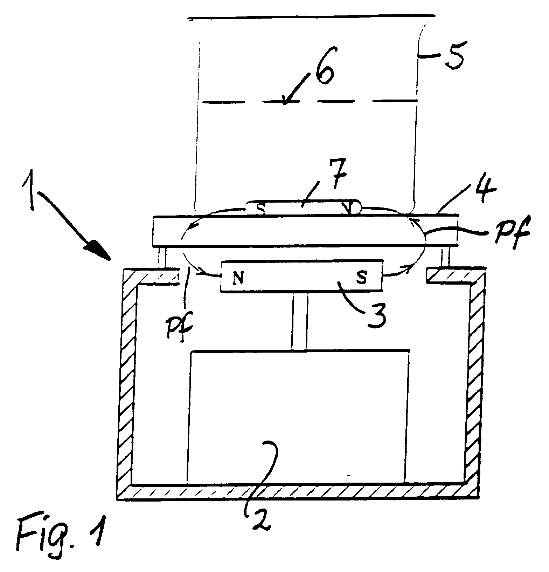

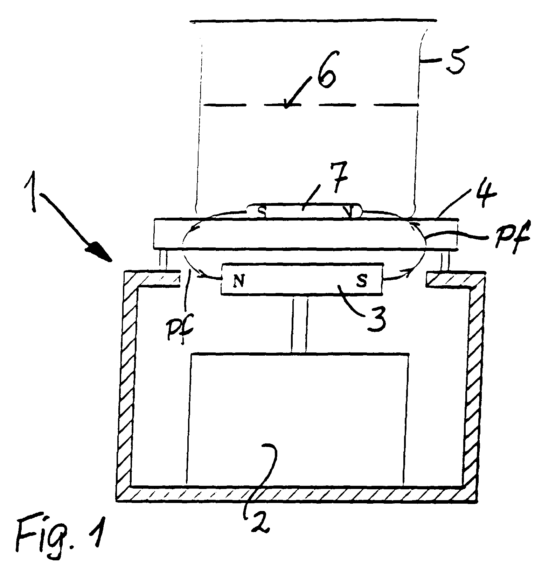

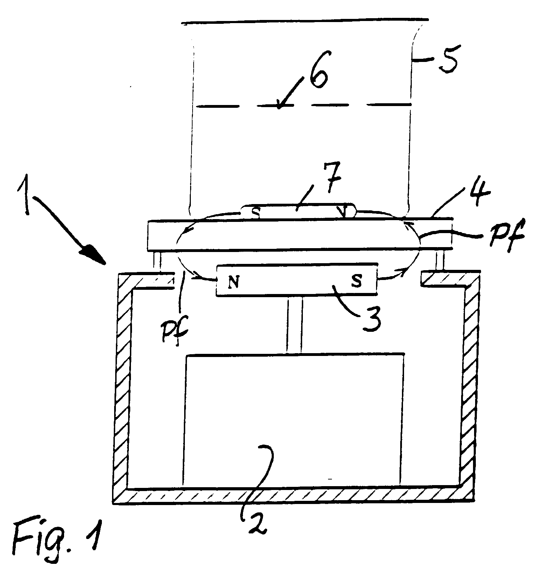

Ein im ganzen mit 1 bezeichneter Magnetrührer weist einen Elektromotor als Antriebsmotor 2 für einen Drehmagneten 3 auf. Oberhalb dieses Drehmagneten 3 befindet sich eine Aufstellplatte 4, die auch eine geheizte Platte sein kann. Auf dieser Platte 4 kann ein Gefäß 5, zum Beispiel ein Becherglas mit einem Medium 6 aufgestellt und dadurch gerührt werden, daß in das Medium 6 ein Stabmagnet 7 eingelegt wird, der mit dem Drehmagneten 3 magnetisch gekuppelt ist, wie es durch die Pfeile Pf in Figur 1 angedeutet ist.

Bei der Ansteuerung des Antriebsmotors 2, wie in Figur 2 dargestellt ist, handelt es sich um einen Regelkreis, der eine Drehzahl-Regelung mit Hilfe eines Drehzahlreglers 8 durchführt, der ein mit Software realisierter, digital betriebener Regler - im folgenden auch nur "Regler 8" genannt - ist. Dadurch wird erreicht, daß die Istdrehzahl des Antriebsmotors 2 und des Drehmagneten 3 sowie des Stabmagneten 7 der Solldrehzahl ohne nennenswerte Regelabweichung folgt. Die Stellgröße u, die von dem Regler 8 ausgeht, wird durch den Wirkungsgrad des Antriebsmotors, die Drehzahl, die Größe des Stabmagneten 7 und die Viskosität des Mediums 6 bestimmt.

In üblicher Weise wird dabei die Führungsgröße w als Sollwert in diesen Regelkreis eingegeben, die beispielsweise die Solldrehzahl ist. Diese wird dann vor dem Regler 8 in üblicher Weise mit der Ausgangsgröße oder dem Istwert y des Prozesses beziehungsweise des Antriebsmotors 2 verglichen, was die in den Regler 8 eingegebene Regelabweichung e als Differenz von der Soll- zur Istdrehzahl ergibt. Somit kann der Regler 8 auf eine solche Regelabweichung bzw. Differenz von Soll- zur Istdrehzahl entsprechend reagieren.

Auf den ganzen Prozeß bzw. den Antriebsmotor 2 und dessen Drehzahl kann außerdem eine Störgröße z zum Beispiel in Form einer Viskositätsveränderung oder gar einen Abriß der magnetischen Kupplung zwischen dem Drehmagneten 3 und dem Stabmagneten 7 einwirken, was die Ausgangsgröße y entsprechend verändert und als Regelabweichung dann wieder auf den Regler 8 einwirkt.

Wird eine konstante Drehzahl des Antriebsmotors 2 von dem zweckmäßigerweise als Software-Regler ausgebildeten Regler 8 eingehalten, wird also die Stellgröße u ausschließlich durch die Viskosität des Mediums 6 in dem Gefäß 5 beeinflußt. Steigt die Viskosität an, steigt auch die Stellgröße an. Nimmt die Viskosität ab, fällt auch die Stellgröße ab.

Der Benutzer kann nun zum Beispiel durch Tastendruck entscheiden, ab welchem Zeitpunkt eine Änderung der Viskosität des Mediums 6 erfaßt werden soll. Im Augenblick dieser Tastenbetätigung wird also die momentane Viskosität als Referenzwert gewählt, gegenüber welcher im weiteren Betriebsverlauf eine Änderung stattfinden und erfaßt werden soll. Dabei erkennt man in Figur 2, daß zwischen dem Regler 8 und dem Antriebsmotor 2 die Stellgröße erfaßt und einer Auswerteeinrichtung 9 zugeführt wird. Erfolgt eine Änderung der Stellgröße, kann dies also von der Auswerteeinrichtung 9 erfaßt und angezeigt werden. Es kann also eine Stellgrößenänderung des Reglers 8 bei Laständerung bemerkt und als Tendenz oder Trend der Viskositätsänderung angezeigt werden. In zweckmäßiger Weise wird also eine relative Stellgrößenänderung als Indikator für die Viskositätsänderung benutzt.

Dabei ist der Auswerteeinrichtung 9 ein Filter zugeordnet, der kurzzeitige Stellgrößenschwankungen eliminiert oder unterdrückt, so daß keine Fehlmessungen durch solche kurzzeitigen Schwankungen erfolgen.

Es wird also bei dem Magnetrührer 1 so verfahren, daß die Antriebsdrehzahl des Antriebsmotors 2 mit Hilfe des Reglers 8 konstant gehalten wird und daß Stellgrößenänderungen des Reglers 8 bei Laständerung erfaßt und angezeigt werden und zwar als Trend oder Tendenz einer Viskositätsänderung. Eventuell kann unmittelbar eine Anzeigevorrichtung vorgesehen sein, die in Prozent angibt, welche Viskositätsänderung beim jeweiligen Betriebszustand gegenüber einem durch Tastendruck gewählten Ausgangszustand gerade vorhanden ist.

Bei sehr hoher Viskosität kann es dazu kommen, daß die magnetische Kupplung zwischen Stabmagnet 7 und Drehmagnet 3 abreißt. Dieser Zustand kann durch die plötzlich abfallende und sehr stark schwankende relative Stellgrößenänderung erfaßt und ausgewertet werden, wobei dies zweckmäßigerweise vor dem Filter der Auswerteeinrichtung 9 erfolgt.

Da ein mit Software realisierter, digital betriebener Regler 8 verwendet wird, kann die Änderung der Stellgröße auf sehr einfache Weise erfaßt werden, ohne daß es besonderer platzaufwendiger Zusatzteile bedarf. Somit wird der gesamte Magnetrührer 1 trotz dieser zusätzlichen Anzeigemöglichkeit für Viskositätsänderungen kaum aufwendiger und vor allem auch nicht größer als ein herkömmlicher derartiger Magnetrührer mit einem Software-Regler für die Drehzahl des Antriebsmotors 2. Vor allem ist es dadurch möglich zwischen dem Regler 8 und dem eigentlichen Prozeß, also dem geregelten Antriebsmotor 2 die Auswerteeinrichtung 9 für die Stellgrößenänderung des Reglers 8 anzuschließen.

Insgesamt ergibt sich also mit sehr preiswerten Mitteln eine recht präzise Auswertung der Stellgrößenänderung bei einer Laständerung, die dazu ausgenutzt werden kann, eine Trend- oder Tendenzanzeige der Viskosität der gerührten Flüssigkeit durchzuführen. Um also festzustellen, ob die Viskosität des Mediums 6 während des Rührvorganges zunimmt, abnimmt oder gleichbleibt, müssen also keine Medium-Proben entnommen und einer aufwendigen Messung unterzogen werden.

Der Magnetrührer 1 mit einem von einem Elektromotor 2 drehangetriebenen Magneten 3 zur Betätigung eines Rühr-Stabmagneten 7 innerhalb eines mit Medium 6 gefüllten Gefäßes 5 weist einen mit Software realisierten, digital betriebenen Regler 8, also einen Softwareregler auf. Mit diesem wird die Antriebsdrehzahl des Motors 2 konstant gehalten. Gleichzeitig wird die Stellgrößenänderung dieses Reglers 8 erfaßt und bei Laständerung als Trend oder Tendenz der Viskositätsänderung des Mediums 6 dem Benutzer mitgeteilt oder angezeigt. Somit kann die Einregelung einer konstanten Motordrehzahl gleichzeitig dazu ausgenutzt werden, Viskositätsänderungen in dem gerührten Medium 6 zu erfassen.

## Patentansprüche

1. Verfahren zum Erkennen der Viskositätsänderung eines mittels Magnetrührer (1) gerührten Mediums (6) in einem Gefäß (5), bei dem in dem Medium (6) ein Rührmagnet (7) dadurch in Drehung versetzt wird, daß unterhalb des Gefäßes (5) ein Magnet (3) mit Hilfe eines Antriebsmotors (2) gedreht wird, der mit dem Rührmagneten magnetisch gekoppelt ist und bei dem die Drehzahl des Antriebsmotors durch Regelung konstant gehalten und die Stellgrößenänderung des Reglers (8) bei Laständerung erfaßt wird, **dadurch gekennzeichnet**, daß eine momentane Viskosität des Mediums (6) als Referenzwert gewählt und eine im weiteren Betriebsverlauf bei Laständerung mittels eines mit Software realisierten, digital betriebenen Reglers (8) erfaßte Stellgrößenänderung als Maß für die Änderung der Viskosität angezeigt wird.

2. Verfahren nach Anspruch 1, dadurch gekennzeichnet, daß Störgrößen in Form von Viskositätsveränderungen mittels des mit Software realisierten, digital betriebenen Reglers (8) ausgeregelt und gleichzeitig dabei die Stellgrößenänderungen des Reglers unter Verwendung entsprechender Software als Maß für die Änderung der Viskosität erfaßt und angezeigt werden.

3. Verfahren nach Anspruch 1 oder 2, dadurch gekennzeichnet, daß stark schwankende relative Stellgrößenänderungen des Reglers erfaßt und als Signal dafür gewertet werden, daß die Kupplung zwischen angetriebenem Magneten (3) und Rührmagneten (7) abgerissen ist.

4. Vorrichtung zur Durchführung des Verfahrens nach einem der Ansprüche 1 bis 3 mit einem Magnetrührer (1), bei dem ein Rührmagnet (7) innerhalb eines Gefäßes (5) für ein Medium (6) mit Hilfe eines durch einen Antriebsmotor (2) drehangetriebenen Magneten (3) über magnetische Kopplung drehbar ist und der Magnetrührer einen Regler (8) für die Drehzahl des Antriebsmotors (2) aufweist und zwischen dem Regler (8) und dem Antriebsmotor (2) eine Auswerteeinrichtung (9) zum Erfassen der Stellgrößenänderung des Reglers (8) angeschlossen ist, **dadurch gekennzeichnet**, daß als Regler (8) ein mit Software realisierter, digital betriebener Regler vorgesehen ist, daß eine Taste zum Erfassen einer zu einem Zeitpunkt bestehenden Viskosität als Referenzwert und eine Anzeige der bei Laständerung erfaßten Stellgrößenänderung als Maß für die Viskositätsänderung vorgesehen sind.

5. Vorrichtung nach Anspruch 4, dadurch gekennzeichnet, daß der Auswerteeinrichtung (9) ein Filter zugeordnet ist, der kurzzeitige Stellgrößenschwankungen eliminiert oder unterdrückt.

## Claims

1. A process for recognising the viscosity variation of a medium (6) stirred by means of a magnetic stirrer (1) in a vessel (5), wherein a stirring magnet (7) in the medium (6) is set in rotation by means of a magnet (3) disposed underneath the vessel (5) and rotated with the help of a drive motor (2), which is magnetically coupled with the stirring magnet, and wherein the rotational speed of the drive motor is kept constant by a controller and the variation in the output of the controller (8) is measured by the load variation, characterised in that an actual viscosity of the medium (6) is selected as a reference value and a controller output variation, measured by means of a software-operated digital controller (8) in the event of a load alteration in the further course of the operation, is displayed as a measurement of the alteration in viscosity.

2. A process according to claim 1, characterised in that disturbances in the form of viscosity alterations can be controlled by means of the software-operated digital controller (8) and at the same time the controller output variation is measured and displayed, using suitable software, as a measurement of the alteration in viscosity.

3. A process according to claim 1 or 2, characterised in that strongly-fluctuating relative controller output variables are measured and evaluated as a signal to indicate that the bond between the driven magnets (3) and the stirring magnets (7) has been broken.

4. An apparatus to implement the process according to one of claims 1 to 3 with a magnetic stirrer (1), where a stirring magnet (7) can be rotated in a vessel (5) for a medium (6) with the help of magnets (3) driven in a rotational direction by a drive motor (2) and the magnetic stirrer has a controller (8) to regulate the speed of the drive motor (2), and an evaluation apparatus (9) is connected between the controller (8) and the drive motor (2) to measure the output alteration of the controller (8), characterised in that a software-operated digital controller (8) is provided, and that a key is provided for measuring the viscosity existing at one point in time as a reference value and a display is provided of the controller output variable measured during the load alteration as a measurement of the alteration in viscosity.

5. An apparatus according to claim 4, characterised in that a filter is assigned to the evaluation apparatus (9) which eliminates or suppresses short-term fluctuations in the controller outputs.

## Revendications

1. Procédé de détection du changement de viscosité d'un fluide (6) agité par un agitateur magnétique (1) dans un récipient (5), selon lequel un aimant agitateur (7) est mis en rotation dans le fluide (6) par le fait qu'à l'aide d'un moteur d'entraînement (2), on fait tourner au-dessous du récipient (5) un aimant (3) qui est couplé magnétiquement à l'aimant agitateur, et selon lequel la vitesse de rotation du moteur d'entraînement est maintenue constante par régulation et on détecte la modification de la variable réglante du régulateur (8) qui se produit lors d'une modification de la charge, **caractérisé** en ce qu'on choisit comme valeur de référence une viscosité momentanée du fluide (6), et on affiche comme mesure du changement de viscosité une modification de la variable réglante qui, au moyen d'un régulateur (8) à fonctionnement numérique qui est réalisé de façon logicielle, est détectée pendant la suite de l'exploitation lors d'une modification de la charge.

2. Procédé selon la revendication 1, **caractérisé** en ce qu'on régule les perturbations sous la forme de modifications de viscosité au moyen du régulateur (8) à fonctionnement numérique qui est réalisé de façon logicielle et, en même temps, on détecte et affiche alors comme mesure du changement de viscosité les modifications de la variable réglante du régulateur, en utilisant un logiciel correspondant.

3. Procédé selon la revendication 1 ou 2, **caractérisé** en ce qu'on détecte des modifications relatives fortement fluctuantes de la variable réglante du régulateur, et on les interpréte comme un signal de ce que le couplage entre l'aimant entraîné (3) et l'aimant agitateur (7) est rompu.

4. Dispositif pour la mise en oeuvre du procédé selon une des revendications 1 à 3, comprenant un agitateur magnétique (1), selon lequel un aimant agitateur (7) peut tourner à l'intérieur d'un récipient (5) pour un fluide (6) en étant couplé magnétiquement à un aimant (3) qui est entraîné en rotation par un moteur d'entraînement (2), et l'agitateur magnétique présente un régulateur (8) pour la vitesse de rotation du moteur d'entraînement (2), et un dispositif d'interprétation (9) est raccordé entre le régulateur (8) et le moteur d'entraînement (2) pour détecter les modifications de la variable réglante du régulateur (8), **caractérisé** en ce qu'on prévoit comme régulateur (8) un régulateur à fonctionnement numérique qui est réalisé de façon logicielle, et en ce qu'on prévoit une touche pour enregistrer comme valeur de référence une viscosité existante à un instant donné, et, comme mesure du changement de viscosité, un affichage de la modification de la variable réglante qui est détectée lors d'une modification de la charge.

5. Dispositif selon la revendication 4, **caractérisé** en ce qu'un filtre est associé au dispositif d'interprétation (9), filtre qui élimine ou atténue les fluctuations temporaires de la variable réglante.
